# EUROPÄISCHE PATENTANMELDUNG

(11) **EP 1 965 110 A1**
(43) Veröffentlichungstag der Anmeldung: **03.09.2008**
(21) Anmeldenummer: 08002018.3
(22) Anmeldetag: 04.02.2008
(51) Int. Cl.: F16K 11/078, F16K 47/02

(54) **Sanitäre Mischarmatur mit einem Armaturengehäuse und einer in diesem angeordneten Steuerpatrone**

(30) Priorität: 28.02.2007 DE 102007010121
(71) Anmelder: Hansa Metallwerke AG, 70567 Stuttgart (DE)
(72) Erfinder: Hecker, Hans-Hermann, 72644 Oberboihingen (DE); Cichos, Ulrich, 70195 Stuttgart (DE)
(74) Vertreter: Ostertag, Ulrich

(57) **Zusammenfassung**

Es wird eine sanitäre Mischarmatur mit einem Armaturengehäuse und einer in diesem angeordneten Steuerpatrone (10) beschrieben. Die Steuerpatrone (10) weist ihrerseits wenigstens zwei Wasserzuläufe (16) für Warm- und für Kaltwasser und eine einstellbare Steuereinheit (22) auf, die zur Steuerung der Menge und des Mischungsverhältnisses je nach ihrer Einstellung die Wasserzuläufe (16) verschließt oder mit wenigstens einem Wasserauslass (18) in Verbindung bringt. Im oder am Wasserauslass (18) der Steuerpatrone (10) ist ein den Wasserdurchfluss begrenzendes Bauteil (19) angeordnet.

## Beschreibung

Die Erfindung betrifft eine sanitäre Mischarmatur mit einem Armaturengehäuse und einer in diesem angeordneten Steuerpatrone, die ihrerseits wenigstens zwei Wasserzuläufe für Warm- und für Kaltwasser und eine einstellbare Steuereinheit aufweist, die zur Steuerung der Menge und des Mischungsverhältnisses je nach ihrer Einstellung die Wasserzuläufe verschließt oder mit wenigstens einem Wasserauslass in Verbindung bringt.

Aus der DE 36 25 289 C2 ist eine derartige Sanitärarmatur bekannt, bei der, um die Wassermenge und/oder die Wassertemperatur zu verändern, eine bewegbare Steuerscheibe mittels eines Übertragungselements und eines Bedienelements von außen gegenüber einer feststehenden Steuerscheibe verschoben oder verdreht wird. Wenn die bewegbare Steuerscheibe in Bezug auf die feststehende Steuerscheibe so verschoben beziehungsweise verdreht ist, dass sie wenigstens eine Durchtrittsöffnung in der feststehenden Steuerscheibe für das Warm- und für das Kaltwasser freigibt, strömt ein Wasserstrom durch die Sanitärarmatur. Bei vollständiger Freigabe der Durchtrittsöffnung kann ein starker Wasserstrom unerwünschte Fließgeräusche in der Steuerkartusche verursachen und zu einem hohen Wasserverbrauch führen.

Vom Markt her bekannt ist eine Vielzahl von Sanitärarmaturen, bei denen im Armaturengehäuse ein Durchflussbegrenzer angeordnet ist, mit dem die Wassermenge, die durch die Sanitärarmatur fließt, begrenzt wird. Derartig angeordnete Durchflussbegrenzer können jedoch nicht einfach nachgerüstet werden und sind überdies aufwändig in der Herstellung.

Aufgabe der vorliegenden Erfindung ist es daher, eine sanitäre Mischarmatur der eingangs genannten Art so auszugestalten, dass sie einfach mit einem den Wasserdurchfluss begrenzenden Bauteil nach- oder umgerüstet werden kann.

Diese Aufgabe wird erfindungsgemäß dadurch gelöst, dass im oder am Wasserauslass der Steuerpatrone ein den Wasserdurchfluss begrenzendes Bauteil angeordnet ist.

Erfindungsgemäß ist also das durchflussbegrenzende Bauteil in der Steuerpatrone integriert. Es begrenzt so bereits in der Steuerpatrone den Wasserdurchfluss und senkt den Wasserverbrauch und verringert Fließgeräusche.'Im Wasserauslass ist das Bauteil platzsparend untergebracht, ohne dass die Außendimensionen der Steuerpatrone dadurch beeinflusst werden. Die erfindungsgemäße Steuerpatrone kann also einfach anstelle einer bekannten Steuerpatrone verwendet werden, ohne dass die Sanitärarmatur ansonsten geändert werden muss.

Bei einer vorteilhaften Ausführungsform gemäß Anspruch 2 kann das Bauteil einfach in oder an einer Wand, insbesondere dem Boden, der Steuerpatrone angeordnet sein.

Insbesondere zum Ein- und Ausbau beziehungsweise zu Wartungs- oder Reparaturzwecken kann gemäß Anspruch 3 das Bauteil einfach von außerhalb der Steuerpatrone zugänglich sein.

Zweckmäßigerweise kann hierzu gemäß Anspruch 4 das Bauteil lösbar in oder an dem Wasserauslass angebracht, insbesondere geklemmt oder geschraubt, sein. Auf diese Weise kann das Bauteil einfach ein- und ausgebaut werden.

Besonders vorteilhaft kann gemäß Anspruch 5 ein Haltemittel, insbesondere ein elastisches Klemmelement oder ein Gewinde, zum Halten des Bauteils vorgesehen sein. Mit einem solchen Haltemittel kann das Bauteil insbesondere lösbar in oder am Wasserauslass fixiert werden.

Alternativ kann vorteilhafterweise gemäß Anspruch 6 eine Fassung des Bauteils in der oder an die Wand der Steuerpatrone ein- beziehungsweise angeformt, insbesondere gespritzt oder gegossen, sein. So kann die Fassung bereits werksseitig einfach und stabil in die Steuerpatrone integriert werden.

Besonders vorteilhaft kann das Bauteil ein Mengenregler sein. Mit dem Mengenregler wird der Wasserdurchfluss ab einem bestimmten Wert unabhängig vom Wasserdruck konstant gehalten.

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden; es zeigen
- Figur 1: schematisch einen axialen Schnitt einer Steuerpatrone gemäß einem ersten Ausführungsbeispiel mit einem in den Patronenboden eingesteckten Mengenregler;
- Figur 2: die Steuerpatrone aus Figur 1 in der Untersicht;
- Figur 3: schematisch einen axialen Schnitt einer Steuerpatrone gemäß einem zweiten Ausführungsbeispiel mit einem angeformten Mengenregler;
- Figur 4: eine Untersicht der Steuerpatrone aus Figur 3.

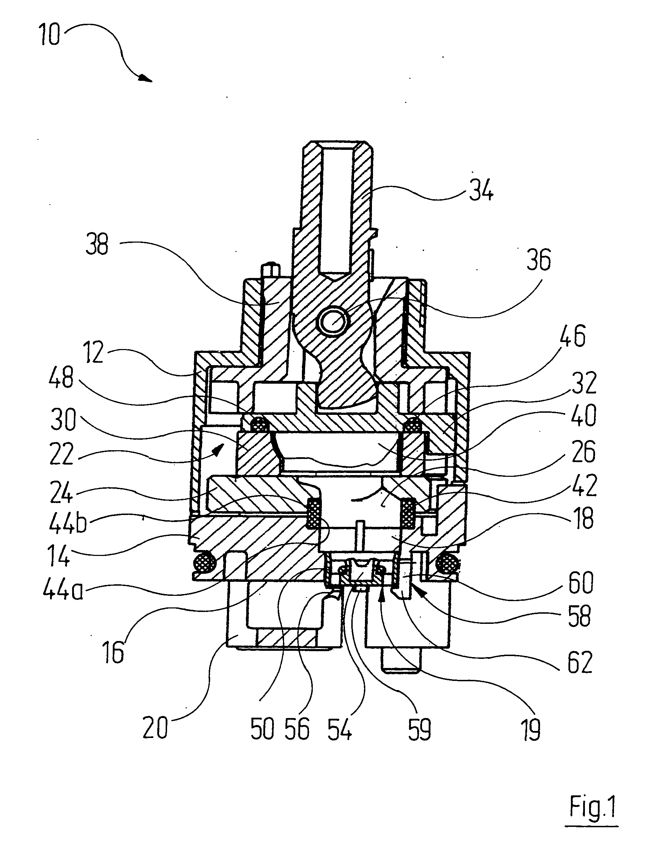

In Figur 1 ist ein insgesamt mit dem Bezugszeichen 10 versehenes erstes Ausführungsbeispiel einer Steuerpatrone für eine sanitäre Mischarmatur im axialen Schnitt gezeigt. Ein Gehäuse 12 ist an seiner Unterseite mit einem Patronenboden 14 abgeschlossen, der mit zwei Wasserzuläufen 16 für Warm- beziehungsweise für Kaltwasser, von denen in Figur 1 nur einer zu sehen ist, sowie mit einem Wasserauslass 18 für Mischwasser versehen ist.

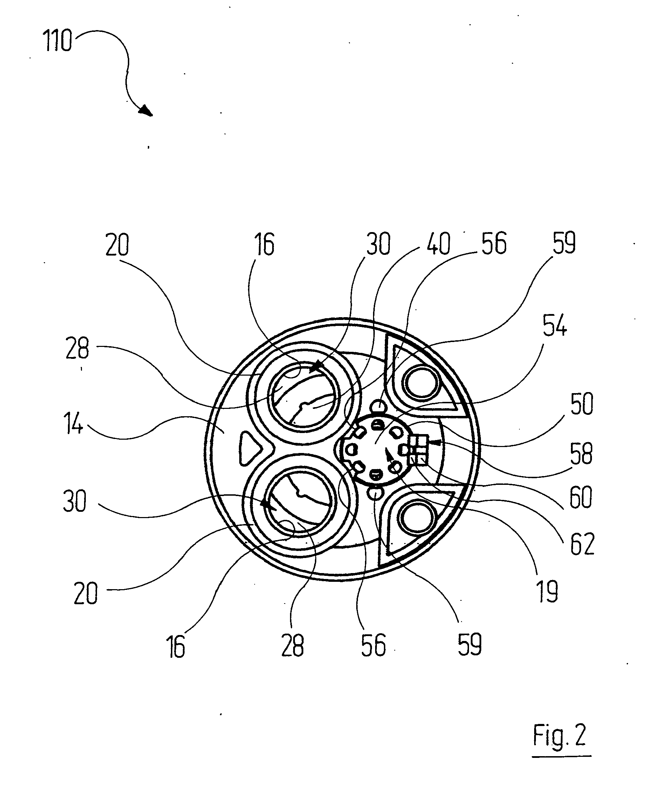

Die Mitten der Mündungsöffnungen der Wasserzuläufe 16 und des Wasserauslasses 18 befinden sich in der Untersicht der Figur 2 betrachtet an den Ecken eines etwa gleichschenkligen Dreiecks, wobei in der Figur 2 der Wasserauslass 18 von einem weiter unten näher erläuterten Mengenregler 19 verdeckt ist.

Die Wasserzuläufe 16 verlaufen jeweils in einem zylindrischen Wasserzulaufstutzen 20, die einstückig an die Unterseite des Patronenbodens 14 angeformt sind, und durch Bohrungen des Patronenbodens 14 hindurch. Die Umfangsseiten der Wasserzulaufstutzen 20 gehen an den einander zugewandten Seiten ineinander über.

Die Steuerpatrone 10 weist eine einstellbare Steuereinheit 22 zur Steuerung der Menge und des Mischungsverhältnisses für Mischwasser auf. Hierzu enthält die Steuerpatrone 10 direkt oberhalb des Patronenbodens 14 eine feststehende Grundscheibe 24, die eine Auslass-Durchtrittsöffnung 26 aufweist, die unmittelbar oberhalb des Wasserauslasses 18 in dem Patronenboden 14 angeordnet ist. Die in Figur 1 obere Begrenzungsfläche der Grundscheibe 24 ist eben.

Die Grundscheibe 24 weist darüber hinaus zwei Zulauf-Durchtrittsöffnungen 28 auf, die unmittelbar oberhalb der beiden Wasserzuläufe 16 angeordnet sind und in Figur 2 gezeigt sind.

Auf der Grundscheibe 24 liegt eine bewegbare Steuerscheibe 30 auf, deren in Figur 1 untere Begrenzungsfläche eben ist.

An der Steuerscheibe 30 greift über einen Mitnehmer 32 der untere Ansatz eines Stellschafts 34 an, der mit Hilfe einer Achse 36 schwenk- und drehbar in einer Führung 38 gelagert ist, die selbst um die Achse der Grundscheibe 24 verdrehbar ist.

Aufgrund der Bewegung des Stellschafts 34 lässt sich über den Mitnehmer 32 die Steuerscheibe 30 gegenüber der Grundscheibe 24 verschieben und verdrehen.

Die Steuerscheibe 30 enthält eine Misch-Durchtrittsöffnung 40, die den Wasserauslass 18 überlappt. Nach oben ist die Misch-Durchtrittsöffnung 40 durch die unteren Stirnfläche des Mitnehmers 32 verschlossen. Liegt diese bewegliche Steuerscheibe 30 derart, dass wenigstens eine der Zulauf-Durchtrittsöffnungen 28 der Grundscheibe 24 mindestens teilweise offen ist, so kann das Wasser durch die Misch-Durchtrittsöffnung 40 und die Auslass-Durchtrittsöffnung 26 nach unten durch den Wasserauslass 18 ausfließen. Wird dagegen die Steuerscheibe 30 derart bewegt, dass die Zulauf-Durchtrittsöffnungen 28 verschlossen sind, so ist das durch die Steuereinheit 22 mit realisierte Ventil geschlossen.

Zwischen dem Patronenboden 14 und der Grundscheibe 24 ist eine die Auslass-Durchtrittsöffnung 26 umgebende geschlossene Auslassdichtung 42 angeordnet. Die zylindrische Auslassdichtung 42 verläuft koaxial zum Wasserauslass 18 und erstreckt sich hälftig in eine Dichtungsnut 44a in der Oberseite des Patronenbodens 14 und eine Dichtungsnut 44b in der Unterseite der Grundscheibe 24.

Zwischen der Steuerscheibe 30 und dem Mitnehmer 32 ist außerdem eine die Misch-Durchtrittsöffnung 40 umgebende geschlossene O-Ring-Dichtung 46 in einer Nut 48 in der unteren Stirnfläche des Mitnehmers 32 angeordnet.

Von der Unterseite des Patronenbodens 14 her steckt von außen einfach zugänglich eine zylindrische Fassung 50 des Mengenreglers 19 mit ihrem oberen Randbereich in dem Wasserauslass 18. In der Fassung 50 befindet sich ein bekanntes Regelelement 54. Mit dem Mengenregler 19 wird in hier nicht weiter interessierender Weise der Wasserdurchfluss unabhängig vom Wasserdruck konstant geregelt, sobald eine bestimmte Größe des Wasserflusses erreicht ist. Hierdurch werden der Wasserverbrauch gesenkt und Fließgeräusche reduziert.

Die Fassung 50 des Mengenreglers 19 ist mit zwei Auflagestegen 56 und einer Klemmfeder 58 gehalten, die in der Untersicht (Figur 2) an den Ecken eines gedachten gleichschenkligen Dreiecks angeordnet sind.

Beidseitig der Klemmfeder 58, zwischen der Klemmfeder 58 und jedem der Auflagenstege 56, ist jeweils ein Zentrierstift 59 angeordnet, die als Zentrierhilfe beim Einstecken des Mengenreglers 19 wirken. Die Zentrierstifte 59 sind jeweils mit einem Ende an der Unterseite des Patronenbodens 14 befestigt oder an diesen angeformt. Sie sind auf ihren dem Mengenregler 19 zugewandten Umfangseiten abgeschrägt und verjüngen sich zu ihren freien Enden hin.

Die Klemmfeder 58 weist einen axial zum Wasserauslass 18 verlaufenden Federarm 60 auf, der auf der den Wasserzulaufstutzen 20 gegenüberliegenden Seite des Mengenreglers 19 neben dem Wasserauslass 18 einstückig an die Unterseite des Patronenbodens 14 angeformt ist.

Das freie Ende des Federarms 60 ist auf seiner zur Fassung 50 des Mengenreglers 19 zugewandten Seite zu einem Widerhaken 62 geformt, welcher den unteren Rand der Fassung 50 umfasst.

Die beiden Auflagestege 56 sind jeweils an die Umfangsseiten der Wasserzulaufstutzen 20 angeformt. Sie befinden sich im Axialschnitt (Figur 1) betrachtet auf gleicher Höhe mit dem Widerhaken 62 der Klemmfeder 58, sodass sie ebenfalls den unteren Rand der Fassung 50 umfassen.

Die dem Rand der Fassung 50 zugewandten Seiten der Auflagestege 56 verlaufen in radialer Richtung zur Fassung 50. Die der Fassung 50 abgewandten Seiten sind zur Fassung 50 hin geneigt.

Beim Einschieben des Mengenreglers 19 gleitet die Fassung 50 an den geneigten Seiten der Auflagestege 56, der Zentrierstifte 59 und des Widerhakens 62 entlang und drückt dabei die Klemmfeder 58 radial nach außen, in der Figur 1 rechts. Sobald der dem Patronenboden 14 zugewandte obere Rand der Fassung 50 in dem Wasserauslass 18 steckt, rastet der untere Rand der Fassung 50 oberhalb der radialen Flächen der Auflagestege 56 ein; die Klemmfeder 58 schnappt zurück und umgreift mit dem Widerhaken 62 den unteren Rand der Fassung 50. Zum Entfernen des Mengenreglers 19 wird die Klemmfeder 58 radial nach außen gebogen und der Mengenregler 19 mit einer Schwenkbewegung aus dem Wasserauslass 18 gezogen.

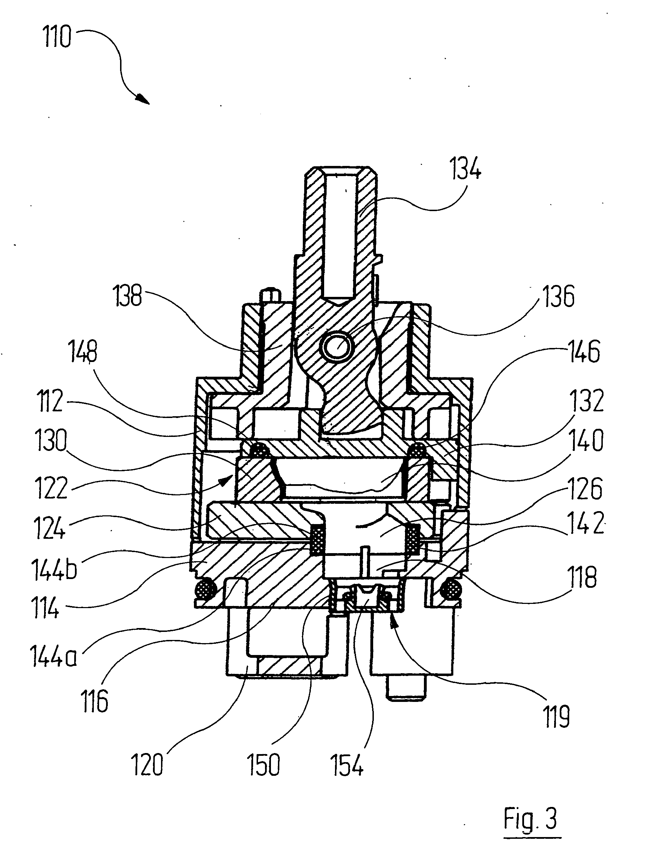

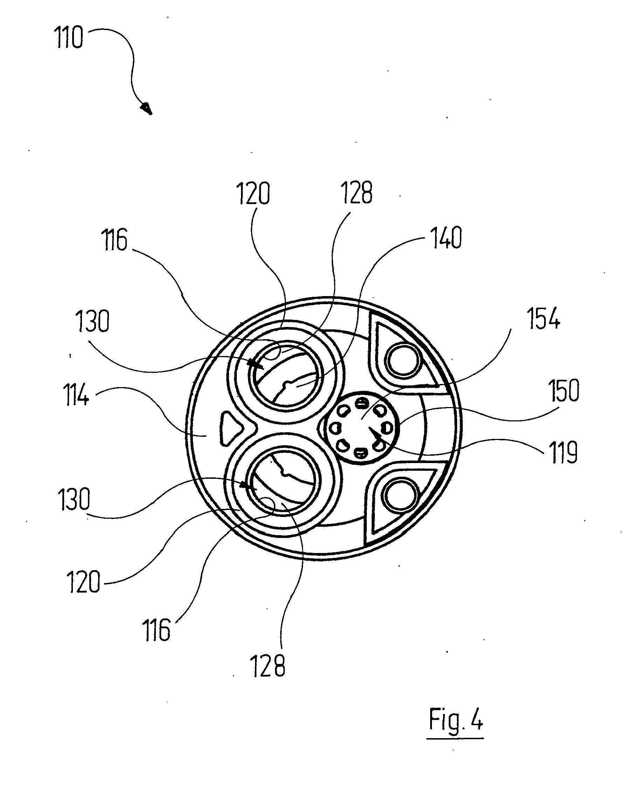

Bei einem zweiten Ausführungsbeispiel, dargestellt in den Figuren 3 und 4, sind diejenigen Elemente, die zu denen des ersten, in den Figuren 1 und 2 dargestellten Ausführungsbeispiels ähnlich sind, mit denselben Bezugszeichen zuzüglich 100 versehen, so dass bezüglich deren Beschreibung auf die Ausführungen zum ersten Ausführungsbeispiel Bezug genommen wird. Dieses Ausführungsbeispiel unterscheidet sich vom ersten dadurch, dass die Fassung 150 des Mengenreglers 119 einstückig an den Patronenboden 114 angeformt, vorzugsweise angespritzt oder angegossen, ist. Auf die Auflagestege 56 und die Klemmfeder 58 des ersten Ausführungsbeispiels kann so verzichtet werden. Der Mengenregler 119 wird bereits bei der Herstellung des Patronenbodens 114 in diesen integriert. Das Reglerelement 154 wird nachträglich eingebaut und kann beispielsweise zu Reparaturzwecken später auch wieder entfernt werden.

Bei allen oben beschriebenen Ausführungsbeispielen einer Steuerpatrone 10; 110 sind unter Anderem folgende Modifikationen möglich:
Die Fassung 50; 150 des Mengenreglers 19; 119 kann auch vollständig in den Wasserauslass 18; 118 eingesteckt oder eingeformt sein oder durch diesen mit gebildet werden.

Statt mit der Klemmfeder 58 und den Auflagestegen 56 kann der Mengenregler 19 auch in anderer Weise lösbar in oder an dem Wasserauslass 18 angebracht sein, beispielsweise kann die Fassung in den Wasserauslass eingeschraubt sein.

Anstelle der Steuereinheit 22; 122 mit der Grundscheibe 24; 124 und der Steuerscheibe 30; 130 kann auch eine andersartige einstellbare Steuereinheit verwendet werden, mit der die Menge und das Mengenverhältnis für Mischwasser gesteuert werden kann.

Es können auch mehrere Wasserauslässe, beispielsweise ein Wasserauslass für eine Wanne oder ein Becken und ein Wasserauslass für eine Brause, vorgesehen sein.

Statt des Mengenreglers 19; 119 kann auch ein andersartiges, den Wasserdurchfluss begrenzendes Bauteil, beispielsweise auch ein Durchflussbegrenzer ohne Regelfunktion, vorgesehen sein.

## Patentansprüche

1. Sanitäre Mischarmatur mit einem Armaturengehäuse
und einer in diesem angeordneten Steuerpatrone, die ihrerseits wenigstens zwei Wasserzuläufe für Warm- und für Kaltwasser und eine einstellbare Steuereinheit aufweist, die zur Steuerung der Menge und des Mischungsverhältnisses je nach ihrer Einstellung die Wasserzuläufe verschließt oder mit wenigstens einem Wasserauslass in Verbindung bringt,
**dadurch gekennzeichnet, dass**
im oder am Wasserauslass (18; 118) der Steuerpatrone (10; 110) ein den Wasserdurchfluss begrenzendes Bauteil (19; 119) angeordnet ist.

2. Steuerpatrone nach Anspruch 1, **dadurch gekenn-zeichnet, dass** das Bauteil (19; 119) in oder an einer Wand, insbesondere dem Boden, der Steuerpatrone (10; 110) angeordnet ist.

3. Steuerpatrone nach einem der vorherigen Ansprüche,
**dadurch gekennzeichnet, dass** das Bauteil (19; 119) von außerhalb der Steuerpatrone (10; 110) aus zugänglich ist.

4. Steuerpatrone nach einem der vorherigen Ansprüche,
**dadurch gekennzeichnet, dass** das Bauteil (19) lösbar in oder an dem Wasserauslass (18) angebracht, insbesondere geklemmt oder geschraubt, ist.

5. Steuerpatrone nach einem der vorherigen Ansprüche,
**gekennzeichnet durch** ein Haltemittel (58, 56), insbesondere ein elastisches Klemmelement (58) oder ein Gewinde, zum Halten des Bauteils (19).

6. Steuerpatrone nach Anspruch 2, **dadurch gekennzeichnet, dass** eine Fassung (150) des Bauteils (119) in der oder an die Wand der Steuerpatrone (110) ein- beziehungsweise angeformt, insbesondere gespritzt oder gegossen, ist.

7. Steuerpatrone nach einem der vorhergehenden Ansprüche, **dadurch gekennzeichnet, dass** das Bauteil ein Mengenregler (19; 119) ist.
